# EUROPEAN PATENT APPLICATION

(11) **EP 4 822 771 A1**
(43) Date of publication of application: **14.10.2026**
(21) Application number: 25870611.8
(22) Date of filing: 07.08.2025
(51) Int. Cl.: H01M 4/36

(54) **SECONDARY BATTERY AND ELECTRIC DEVICE**

(30) Priority: 30.09.2024 CN 202411389200
(71) Applicant: Contemporary Amperex Technology Co., Limited, Ningde, Fujian 352100 (CN)
(72) Inventor: ZHAO, Yuzhen, Ningde, Fujian 352100 (CN); NIU, Songlin, Ningde, Fujian 352100 (CN); WEI, Xichen, Ningde, Fujian 352100 (CN); XUE, Junpeng, Ningde, Fujian 352100 (CN)
(74) Representative: Ran, Handong
(86) International application number: PCT/CN2025/113268
(87) International publication number: WO 2026/066707

(57) **Abstract**

The present application provides a secondary battery and an electric device. The secondary battery comprises a positive electrode sheet, a negative electrode sheet, and an electrolyte solution; the positive electrode sheet comprises a positive electrode current collector and a positive electrode film layer provided on at least one side of the positive electrode current collector and comprising a positive electrode active material; the positive electrode active material comprises an inner core of lithium iron phosphate material and a carbon shell layer at least partially covering the outer surface of the inner core; in the Raman spectrum of the positive electrode active material, a ratio I_{d}/I_{g} of a peak intensity I_{d} of D peak of a Raman shift within a range of 1350±50 cm⁻¹ to a peak intensity I_{g} of G peak of a Raman shift within a range of 1580±50 cm⁻¹ is 0.2-1.5; the negative electrode sheet comprises a negative electrode current collector and a negative electrode film layer provided on at least one side of the negative electrode current collector; and when the state of charge of the secondary battery is 100% or the voltage of the secondary battery is 3.65 V, a heat release amount Q of the negative electrode film layer in the electrolyte solution satisfies: 250 J/g≤Q≤600 J/g.

## Description

### CROSS-REFERENCE TO RELATED APPLICATIONS

The present application claims priority to Chinese Patent Application No. 202411389200.0, filed on September 30, 2024 and entitled "SECONDARY BATTERY AND POWER CONSUMING APPARATUS", which is incorporated herein by reference in its entirety.

### TECHNICAL FIELD

The present application relates to the technical field of secondary batteries, and in particular, to a secondary battery and a power consuming apparatus.

### BACKGROUND

In recent years, secondary batteries have been widely used in energy storage power supply systems such as water power stations, thermal power stations, wind power stations, and solar power stations, and in multiple fields such as electric tools, electric bicycles, electric motorcycles, electric vehicles, military equipment, and aerospace. However, in related art, secondary batteries are difficult to have both high energy efficiency and overcharge safety.

Therefore, there is a need to provide a secondary battery having high energy efficiency and good overcharge safety.

### SUMMARY

In view of the above problems, the present application is accomplished. An object of the present application is to provide a secondary battery having both high energy efficiency and good overcharge safety and a power consuming apparatus.

The present inventor finds that the above object can be achieved by adopting the technical solutions in the present application.

According to a first aspect of the present application, a secondary battery is provided, including a positive electrode plate, a negative electrode plate, and an electrolyte solution.

The positive electrode plate includes a positive electrode current collector and a positive electrode film layer that is disposed on at least one side of the positive electrode current collector and includes a positive electrode active material. The positive electrode active material includes a core of a lithium iron phosphate material and a carbon shell layer that is at least partially coated on an outer surface of the core. In the Raman spectrum of the positive electrode active material, the ratio I_{d}/I_{g} of the peak intensity I_{d} of the D peak with a Raman shift of 1350±50 cm⁻¹ to the peak intensity I_{g} of the G peak with a Raman shift of 1580±50 cm⁻¹ is 0.2-1.5. The negative electrode plate includes a negative electrode current collector and a negative electrode film layer disposed on at least one side of the negative electrode current collector. When the state of charge of the secondary battery is 100% or the voltage of the secondary battery is 3.65 V, the released heat Q of the negative electrode film layer in an electrolyte solution meets: 250 J/g ≤ Q ≤ 600 J/g.

The secondary battery of the present application has high energy efficiency and good overcharge safety.

In any implementation, the I_{d}/I_{g} of the positive electrode active material is 0.9 to 1.3.

When the I_{d}/I_{g} of the positive electrode active material is 0.9 to 1.3, the secondary battery of the present application has high energy efficiency and good cycle performance.

In any implementation, the I_{d}/I_{g} of the positive electrode active material is 0.3 to 1.1.

When the I_{d}/I_{g} of the positive electrode active material is 0.3 to 1.1, the secondary battery of the present application has a low expansion force.

In any implementation, the I_{d}/I_{g} of the positive electrode active material is 0.8 to 1.2.

When the I_{d}/I_{g} of the positive electrode active material is 0.8 to 1.2, the secondary battery of the present application has high energy efficiency, good cycle performance, and low expansion force.

In any implementation, the carbon shell layer includes both amorphous carbon and graphene.

When the carbon shell layer includes both amorphous carbon and graphene, the secondary battery of the present application has high energy efficiency and good cycle performance.

In any implementation, the powder resistivity of the positive electrode active material under a pressure of 16 Mpa is 0 to 30 Q • cm.

When the powder resistivity of the positive electrode active material under a pressure of 16 Mpa is 0 to 30 Q • cm, the secondary battery of the present application has high energy efficiency and good cycle performance.

In any implementation, the lithium iron phosphate material includes a material represented by the following formula:

LiₓFe_{y}M_{z}PO₄,

where 0.95 < x < 1.05, 0.96 < y ≤ 1, 0 ≤ z < 0.04, and
M includes one or more of Ti, V, Mg, Zr, and Y.

In any implementation, the content of the element M based on the total weight of the positive electrode active material is 0.02% to 0.3%.

When the content of the element M is 0.02% to 0.3%, the secondary battery of the present application has high energy efficiency and good cycle performance.

In any implementation, the content of the element M based on the total weight of the positive electrode active material is 0.03% to 0.1%.

When the content of the element M is 0.03% to 0.1%, the secondary battery of the present application has high energy efficiency and good cycle performance.

According to a second aspect of the present application, a power consuming apparatus is provided, which includes the secondary battery according to the first aspect of the present application.

### BRIEF DESCRIPTION OF THE DRAWINGS

To describe the technical solutions in the embodiments of the present application more clearly, the accompanying drawings required for describing the embodiments of the present application will be described briefly below. Apparently, the accompanying drawings described below show only some embodiments of the present application, and other drawings can be obtained by a person of ordinary skill in the art from the accompanying drawings without creative efforts.
FIG. 1 is a schematic view of a secondary battery according to an implementation of the present application.
FIG. 2 is an exploded view of the secondary battery according to an implementation of the present application shown in FIG. 1.
FIG. 3 is a schematic view of a battery module according to an implementation of the present application.
FIG. 4 is a schematic view of a battery pack according to an implementation of the present application.
FIG. 5 is an exploded view of the battery pack according to an implementation of the present application shown in FIG. 4.
FIG. 6 is a schematic view of a power consuming apparatus powered by a secondary battery according to an implementation of the present application.

Description of reference numerals:
1. battery pack; 2. upper box body; 3. lower box body; 4. battery module; 5. secondary battery; 51. case; 52: electrode assembly; 53: cover plate.

### DETAILED DESCRIPTION

Hereinafter, implementations of the secondary battery and power consuming apparatus of the present application are described in detail and specifically disclosed with reference to of the drawings as appropriate. However, there will be situations in which unnecessary detailed descriptions are omitted. For example, there are situations where detailed descriptions of well-known items and repeated descriptions of actually identical structures are omitted, to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

The "ranges" disclosed in the present application are defined in the form of lower and upper limits, with a given range being defined by the selection of a lower limit and an upper limit defining the boundaries of the particular range. A range defined in this manner may be inclusive or exclusive of the end values, and may be arbitrarily combined, that is, any lower limit may be combined with any upper limit to form a range. For example, if ranges of 60-120 and 80-110 are listed for a particular parameter, it is to be understood that ranges of 60-110 and 80-120 are also expected. Additionally, if the minimum range values 1 and 2 and the maximum range values 3, 4 and 5 are listed, the following ranges are all contemplated: 1-3, 1-4, 1-5, 2-3, 2-4 and 2-5. In the present application, unless stated otherwise, the numerical range "a-b" represents an abbreviated representation of any combination of real numbers between a to b, where both a and b are real numbers. For example, the numerical range "0-5" means that all real numbers between 0-5 are listed herein, and "0-5" is merely an abbreviated representation of the combination of these numbers. In addition, when a parameter is expressed as an integer ≥ 2, it is equivalent to disclosing that the parameter is, for example, an integer of 2, 3, 4, 5, 6, 7, 8, 9, 10, 11, and 12, etc.

Unless otherwise specified, all the implementations and optional implementations of the present application can be combined with each other form new technical solutions.

Unless otherwise specified, all technical features and optional technical features of the present application can be combined with each other to form new technical solutions.

Unless otherwise specified, all the steps in the present application can be performed in the order described or in a random order, and preferably in the order described. For example, the method includes steps (a) and (b), meaning that the method may comprise steps (a) and (b) performed sequentially, or may comprise steps (b) and (a) performed sequentially. For example, the reference to the method may further include step (c), meaning that step (c) may be added to the method in any order. For example, the method may include steps (a), (b) and (c), include steps (a), (c) and (b), or steps (c), (a) and (b), and the like.

Unless otherwise specifically stated, "comprising" and "including" mentioned in the present application indicate open inclusion or closed inclusion. For example, the "including" and "comprising" may indicate that it is possible to include or comprise other components not listed, and it is also possible to include or comprise the listed components exclusively.

Unless otherwise specified, the term "or" is inclusive in the present application. For example, the phrase "A or B" means "A, B, or both A and B". More specifically, the condition "A or B" is satisfied by any one of the following conditions: A is true (or present) and B is false (or absent); A is false (or absent) and B is true (or present); or both A and B are true (or present).

In recent years, secondary batteries have been widely used in energy storage power supply systems such as water power stations, thermal power stations, wind power stations, and solar power stations, and in multiple fields such as electric tools, electric bicycles, electric motorcycles, electric vehicles, military equipment, and aerospace. However, in related art, secondary batteries are difficult to have both high energy efficiency and overcharge safety. Therefore, there is a need to provide a secondary battery having high energy efficiency and good overcharge safety.

Based on this, the present application provides a technical solution for resolving the foregoing technical problems.

According to a first aspect of the present application, a secondary battery is provided, including a positive electrode plate, a negative electrode plate, and an electrolyte solution.

The positive electrode plate includes a positive electrode current collector and a positive electrode film layer that is disposed on at least one side of the positive electrode current collector and includes a positive electrode active material. The positive electrode active material includes a core of a lithium iron phosphate material and a carbon shell layer that is at least partially coated on an outer surface of the core. In the Raman spectrum of the positive electrode active material, the ratio I_{d}/I_{g} of the peak intensity I_{d} of the D peak with a Raman shift of 1350±50 cm⁻¹ to the peak intensity I_{g} of the G peak with a Raman shift of 1580±50 cm⁻¹ is 0.2-1.5. The negative electrode plate includes a negative electrode current collector and a negative electrode film layer disposed on at least one side of the negative electrode current collector. When the state of charge of the secondary battery is 100% or the voltage of the secondary battery is 3.65 V, the released heat Q of the negative electrode film layer in an electrolyte solution meets: 250 J/g ≤ Q ≤ 600 J/g.

Herein, the term "D peak" refers to a peak located at 1350 ± 50 cm⁻¹ in the Raman spectrum and corresponding to the characteristic peak of the lattice defect in the carbon shell layer coated on the surface of the positive electrode active material.

Herein, the term "G peak" refers to a peak located at 1350 ± 50 cm⁻¹ in the Raman spectrum and corresponding to the characteristic peak of the disordered structure in the carbon shell layer coated on the surface of the positive electrode active material.

Herein, the term "I_{d}" refers to the peak intensity of the D peak.

Herein, the term "I_{g}" refers to the peak intensity of the G peak.

Herein, the term "I_{d}/I_{g}" refers to the ratio of the intensity of the D peak to the intensity of the G peak, and is used for quantifying the graphitization degree of the positive electrode active material.

Herein, the term "graphitization degree" has a meaning known in the art and refers to the graphitization degree of the carbon component, which reflects the integrity of the graphite crystal structure in carbon-coated lithium iron phosphate, especially in the carbon coating layer, that is, the regularity of the arrangement of carbon atoms in the graphite structure.

As the ratio I_{d}/I_{g} of the peak intensity I_{d} of the D peak to the peak intensity I_{g} of the G peak of the positive electrode active material decreases, the graphitization degree of the positive electrode active material increases, the structure is closer to an ideal graphitic structure, the surface is more likely to be smooth and non-polar, and the overall water repellency of the material is enhanced. If the I_{d}/I_{g} value of the positive electrode active material is within an appropriate range, the water content in the positive electrode active material is reduced, the processing process of the positive electrode plate is improved, and the water content in the positive electrode plate and the water content in the battery are reduced, thereby reducing the gas generation in the battery and reducing the expansion force of the battery core during the cycle process. In addition, as the graphitization degree of the lithium iron phosphate material increase, the electrical conductivity of the lithium iron phosphate material also correspondingly increases, so that the overvoltage caused by insufficient electrical conductivity of the lithium iron phosphate material and the elevated lithium ion dissolution caused by the overvoltage in a charging and discharging process can be reduced, and the deformation of the positive electrode active material and the expansion of the electrode plate during the cycle process can be reduced, thereby improving the cycle performance of the battery. The enhanced electrical conductivity further lowers the interfacial resistance of the positive electrode active material, lowers the electronic resistance, and ameliorates the internal resistance of the battery.

In a fully charged state of the battery, the heat generation of the negative electrode film layer is limited to a particular range, so that the heat release of the battery core is reduced, and the overcharge performance is improved.

The use of a water-repellent high-conductivity positive electrode plate together with a low-heat-generation negative electrode plate improves the energy efficiency and improves the safety performance of the battery core, to satisfy the application requirements in an energy storage scenario.

Therefore, the secondary battery of the present application has high energy efficiency and good overcharge safety.

The I_{d}/I_{g} can be determined by any method known in the art. For example, following the method in GB/T 40219-2021, the positive electrode active material powder is pressed into a tablet, and the pressed tablet is tested by using the LabRAM HRP Evolution laser microscopic Raman spectrometer. 3 points are randomly selected on the pressed tablet for test, and an average of three measurements is obtained. A solid laser with a wavelength of 523 nm, a beam diameter of 1.2 µm, and a power of 1 mW is used as a light source. The mode of measurement is macro-Raman, and a CCD detector is used.

In some implementations, the I_{d}/I_{g} of the positive electrode active material may be 0.2, 0.3, 0.4, 0.5, 0.6, 0.7, 0.8, 0.9, 1.0, 1.1, 1.2, 1.3, 1.4, 1.5, a range formed by any two of the foregoing values, or a value within the range.

In some implementations, I _{d}/I_{g} of the positive electrode active material is 0.9 to 1.3.

When the I_{d}/I_{g} of the positive electrode active material is 0.9 to 1.3, because the positive electrode material has both good electrical conductivity and ion conductivity, the secondary battery of the present application has high energy efficiency and good cycle performance.

In some implementations, the I_{d}/I_{g} of the positive electrode active material is 0.3 to 1.1.

When the I_{d}/I_{g} of the positive electrode active material is 0.3 to 1.1, because the positive electrode material has strong water repellency, the secondary battery of the present application has a low expansion force.

In some implementations, the I_{d}/I_{g} of the positive electrode active material is 0.8 to 1.2.

When the I_{d}/I_{g} of the positive electrode active material is 0.8 to 1.2, because the positive electrode material considers high water repellency, high electronic conductivity, and ion conductivity, the secondary battery of the present application has high energy efficiency, good cycle performance, and low expansion force.

In some implementations, the carbon shell layer includes both amorphous carbon and graphene.

The dual coating of lithium iron phosphate with amorphous carbon and graphene can improve the electronic conductivity of the material, lower the interfacial resistance of the positive electrode active material, reduce the electronic resistance, ameliorate the internal resistance of the battery, and improve the energy efficiency and the cycle performance of the battery core. As a result, the secondary battery of the present application has high energy efficiency and good cycle performance.

In the preparation process of lithium iron phosphate, amorphous carbon and graphene are coated simultaneously, or amorphous carbon is coated firstly and then graphene is coated.

In some implementations, the powder resistivity of the positive electrode active material under a pressure of 16 Mpa is 0 to 30 Q • cm.

When the powder resistivity of the positive electrode active material under a pressure of 16 Mpa is 0 to 30 Q • cm, the internal resistance of the battery is ameliorated, and the energy efficiency and the cycle performance of the battery core are improved. As a result, the secondary battery of the present application has high energy efficiency and good cycle performance.

In some implementations, the lithium iron phosphate material includes a material represented by the following formula:

LiₓFe_{y}M_{z}PO₄,

where 0.95 < x < 1.05, 0.96 < y ≤ 1, 0 ≤ z < 0.04, and
M includes one or more of Ti, V, Mg, Zr, and Y.

In some implementations, the content of the element M based on the total weight of the positive electrode active material is 0.02% to 0.3%. In some implementations, the content of the element M based on the total weight of the positive electrode active material is 0.03% to 0.1%.

The electrical conductivity of lithium iron phosphate is relatively low. By doping metal elements, the concentration of free electrons in the lattice of lithium iron phosphate is increased, the potential barrier for the transport of lithium ions is lowered, the diffusion rate of lithium ions is increased, and the rate performance of the battery is improved. The structural stability of the positive electrode active material can also be effectively improved, so that the secondary battery has both high energy efficiency and good cycle performance.

In some implementations, the content of the element M based on the total weight of the positive electrode active material is 0, 0.01%, 0.02%, 0.03%, 0.04%, 0.05%, 0.06%, 0.07%, 0.08%, 0.09%, 0.1%, 0.15%, 0.2%, 0.25%, 0.3%, or a range formed by any two of the foregoing values or a value within the range.

The positive electrode active material may be prepared by using a common method in the art. In some implementations, the method for preparing the positive electrode active material includes the following steps: mixing a lithium source, an iron source, a phosphorus source, an M source, and a carbon source according to a ratio, and sintering, to obtain the positive electrode active material including a core of a lithium iron phosphate material and a carbon shell layer that is at least partially coated on an outer surface of the core.

In some implementations, the lithium source includes one or more of Li₂CO₃, LiH₂PO₄, and Li₃PO₄.

In some implementations, the iron source includes one or more of FeSO₄, FePO₄, FeCl₂, FeC₂O₄, and Fe₂O₃.

In some implementations, the phosphorus source includes one or more of NH₄H₂PO₄ and H₃PO₄.

In some implementations, the M source includes one or more of metal salts, metal oxides and organometallic compounds of Nb, Ti, V, W and Mn.

In some implementations, the carbon source includes one or more of glucose, sucrose, starch, polyethylene glycol, phenolic resin, carbon black, graphite, carbon nanotubes, tannic acid, sodium dodecyl benzenesulfonate, alkyl glucoside, polyaniline, fructose, disodium EDTA, polyvinylpyrrolidone and lecithin.

In some implementations, the sintering temperature is 500°C to 900°C, for example, 600°C. The sintering time at the sintering temperature is from 8 h to 20 h, for example, 16 h.

In some implementations, the sintering temperature is 500°C, 600°C, 650°C, 700°C, 750°C, 800°C, 850°C, 900°C, or a range formed by any two of the foregoing values or a value within the range.

In some implementations, the sintering time is 8 h, 9 h, 10 h, 11 h, 12 h, 13 h, 14 h, 15 h, 16 h, 17 h, 18 h, 19 h, 20 h, or a range formed by any two of the foregoing values or a value within the range.

A second aspect of the present application provides a power consuming apparatus, which includes the secondary battery according to the first aspect of the present application.

In addition, the secondary battery and power consuming apparatus of the present application are described below with reference to the accompanying drawings as appropriate.

In one implementation of the present application, a secondary battery is provided.

Generally, the secondary battery includes a positive electrode plate, a negative electrode plate, an electrolyte, and a separator. During the charging and discharging process of the battery, active ions are intercalated and deintercalated repeatedly between the positive electrode plate and the negative electrode plate. The electrolyte serves to conduct ions between the positive electrode plate and the negative electrode plate. The separator is arranged between the positive electrode plate and the negative electrode plate, and mainly functions to prevent a short circuit between the positive electrode and the negative electrode while allowing ions to pass through.

### [Positive electrode plate]

The positive electrode plate includes a positive electrode current collector and a positive electrode film layer disposed on at least one surface of the positive electrode current collector. The positive electrode film layer includes a positive electrode active material.

For example, the positive electrode current collector has two opposite surfaces in its own thickness direction, and the positive electrode film layer is disposed on either or both of the two opposite surfaces of the positive electrode current collector.

In some implementations, the positive electrode current collector may be a metal foil or a composite current collector. For example, an aluminum foil can be used as the metal foil. The composite current collector may include a polymer material substrate and a metal layer formed on at least one surface of the polymer material substrate. The composite current collector can be formed by forming a metal material (aluminium, an aluminium alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), and polyethylene (PE)).

In some implementations, the positive electrode film layer further optionally includes a binder. For example, the binder may include at least one of polyvinylidene difluoride (PVDF), polytetrafluoroethylene (PTFE), a vinylidene difluoride-tetrafluoroethylenepropylene terpolymer, a vinylidene difluoride-hexafluoropropylene-tetrafluoroethylene terpolymer, a tetrafluoroethylene-hexafluoropropylene copolymer and a fluorine-containing acrylate resin.

In some implementations, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofibers.

In some implementations, the positive electrode plate can be prepared by dispersing the components for preparing the positive electrode plate, for example, the positive electrode active material, the conductive agent, the binder and any other components in a solvent (for example, N-methyl pyrrolidone) to form a positive electrode slurry; and applying the positive electrode slurry on a positive electrode current collector, followed by oven drying, cold pressing and other procedures, to obtain the positive electrode plate.

### [Negative electrode plate]

The negative electrode plate includes a negative electrode current collector and a negative electrode film layer disposed on at least one surface of the negative electrode current collector. The negative electrode film layer includes a negative electrode active material.

For example, the negative electrode current collector has two opposite surfaces in its own thickness direction, and the negative electrode film layer is disposed on either or both of the two opposite surfaces of the negative electrode current collector.

In some implementations, the negative electrode current collector can be a metal foil or a composite current collector. For example, a copper foil can be used as the metal foil. The composite current collector may include a polymer material substrate and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), and polyethylene (PE)).

In some implementations, the negative electrode active material may be a negative electrode active material for batteries well known in the art. For example, the negative electrode active material may include at least one of artificial graphite, natural graphite, soft carbon, hard carbon, silicon-based materials, tin-based materials, lithium titanate, and the like. The silicon-based material may be at least one selected from elemental silicon, a silicon-oxygen compound, a silicon-carbon composite, a silicon-nitrogen composite, and a silicon alloy. The tin-based material may be at least one selected from elemental tin, a tin-oxygen compound, and a tin alloy. However, the present application is not limited to these materials, and other conventional materials useful as negative electrode active materials for batteries can also be used. These negative electrode active materials can be used alone or in combinations of two or more.

In some implementations, the negative electrode film layer further optionally includes a binder. The binder may be at least one selected from styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some implementations, the negative electrode film layer further optionally includes a conductive agent. The conductive agent may be at least one selected from superconducting carbon, acetylene black, carbon black, Ketjen black, carbon dots, carbon nanotubes, graphene, and carbon nanofibers.

In some implementations, the negative electrode film layer may further optionally include other auxiliaries, for example, a thickener (e.g., sodium carboxymethyl cellulose (CMC-Na)) and the like.

In some embodiments, the negative electrode plate can be prepared by dispersing the components for preparing the negative electrode plate, for example, the negative electrode active material, the conductive agent, the binder, and any other components, in a solvent (for example, deionized water) to form a negative electrode slurry; and applying the negative electrode slurry on a negative electrode current collector, followed by oven drying, cold pressing and other procedures, to obtain the negative electrode plate.

### [Electrolyte]

The electrolyte serves to conduct ions between the positive electrode plate and the negative electrode plate. The type of the electrolyte is not particularly limited in the present application, and can be selected according to requirements. For example, the electrolyte may be in a liquid, gel, or full solid state.

In some implementations, an electrolyte solution is used as the electrolyte. The electrolyte solution contains an electrolyte salt and a solvent.

In some implementations, the electrolyte salt may be at least one selected from lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluoro bis(oxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate ethyl propionate, propyl propionate, methyl butyrate, ethyl butyrate, 1,4-butyrolactone, sulfolane, dimethyl sulfone, methyl ethyl sulfone and diethyl sulfone.

In some implementations, the electrolyte solution further optionally contains an additive. For example, the additive may include a negative electrode film-forming additive, a positive electrode film-forming additive, and also additives that can improve certain battery performances, such as an additive that improves the overcharge performance of the battery, an additive that improves the high- or low-temperature performance of the battery, and the like.

### [Separator]

In some implementations, the secondary battery further includes a separator. The type of the separator is not particularly limited in the present application, and any well-known separator with a porous structure having good chemical stability and mechanical stability can be used.

In some implementations, the material of the separator may be at least one selected from glass fiber, non-woven cloth, polyethylene, polypropylene, and polyvinylidene fluoride. The separator may be a single-layer film or a multi-layer composite film, which is not particularly limited. When the separator is a multi-layer composite film, the material of each layer may be the same or different, which is not particularly limited.

In some implementations, the positive electrode plate, the negative electrode plate, and the separator can be made into an electrode assembly by a winding process or a stacking process.

In some implementations, the secondary battery may include an outer package. The outer package can be used to encapsulate the electrode assembly and electrolyte.

In some implementations, the outer package of the secondary battery may be a hard case, such as a hard plastic case, an aluminium case, a steel case, and the like. The outer package of the secondary battery may alternatively be a soft pack, such as a pouch-type soft pack. The material of the soft pack can be a plastic, and examples of the plastic include polypropylene, polybutylene terephthalate, and polybutylene succinate.

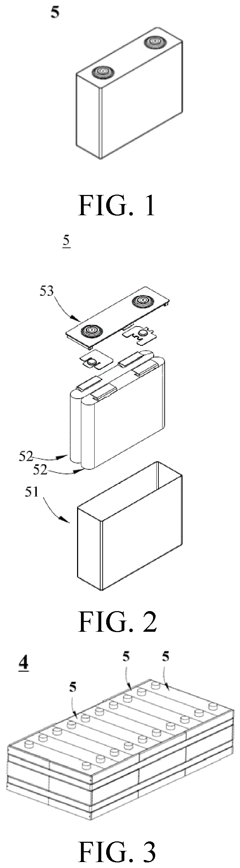

The shape of the secondary battery is not particularly limited in the present application, and it may be cylindrical, square, or any other shape. For example, FIG. 1 shows an example of a secondary battery 5 having a square structure.

In some implementations, referring to FIG. 2, the outer package may include a case 51 and a cover plate 53. The case 51 may include a bottom plate and a side plate connected to the bottom plate. The bottom plate and the side plate define an accommodating cavity. The case 51 has an opening that communicates with the accommodating cavity, and the cover plate 53 can cover the opening to close the accommodating cavity. The positive electrode plate, the negative electrode plate, and the separator may be wound or stacked to form an electrode assembly 52. The electrode assembly 52 is encapsulated in the accommodating cavity. The electrolyte solution impregnates the electrode assembly 52. The number of the electrode assembly 52 in the secondary battery 5 may be one or more, which can be selected by those skilled in the art according to specific actual requirements.

In some implementations, secondary batteries can be assembled into a battery module, the number of secondary batteries contained in the battery module can be one or more, and the specific number can be selected by those skilled in the art according to the application and capacity of the battery module.

FIG. 3 shows an example of a battery module 4. Referring to FIG. 3, in the battery module 4, multiple secondary batteries 5 may be sequentially arranged along the length direction of the battery module 4. Of course, they can be arranged in any other way. The multiple secondary batteries 5 may be further fixed by fasteners.

Optionally, the battery module 4 may further include a shell having an accommodating space, in which the multiple secondary batteries 5 are accommodated.

In some implementations, the battery module may further be assembled into a battery pack, the number of battery module contained in the battery pack may be one or more, and the specific number can be selected by those skilled in the art according to the use and capacity of the battery pack.

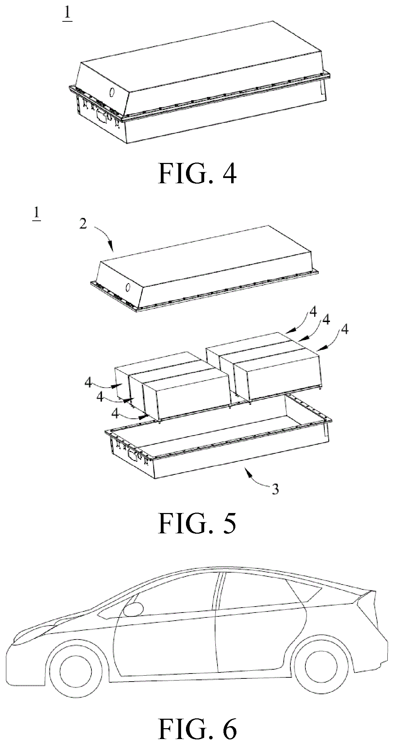

FIG. 4 and FIG. 5 show an example of a battery pack 1. Referring to FIG. 4 and FIG. 5, the battery pack 1 may include a battery box and multiple battery modules 4 arranged in the battery box. The battery box includes an upper box body 2 and a lower box body 3. The upper box body 2 can cover the lower box body 3, to define an enclosed space for accommodating the battery module 4. The multiple battery modules 4 may be disposed in the battery box in any manner.

In addition, the present application further provides a power consuming apparatus. The power consuming apparatus includes at least one of the secondary battery, the battery module, or the battery pack provided in the present application. The secondary battery, the battery module, or the battery pack can be used as a power source for the power consuming apparatus, and can also be used as an energy storage unit for the power consuming apparatus. The power consuming apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, and an energy storage system, etc.

For the power consuming apparatus, the secondary battery, the battery module, or the battery pack can be selected according to the requirements during use.

FIG. 6 shows an example of the power consuming apparatus. The power consuming apparatus is an all-electric vehicle, a hybrid electric vehicle, or a plug-in hybrid electric vehicle, etc. In order to meet the requirements of the power consuming apparatus for high power and high energy density of secondary batteries, a battery pack or a battery module may be used.

The apparatus may also be, for example, a mobile phone, a tablet computer, and a laptop, etc. The apparatus is generally required to be light and thin, and can use a secondary battery as a power source.

### Examples

Examples of the present application will be described hereinafter. The examples described below are exemplary and only used to explain the present application, and should not be construed as a limitation on the present application. Where specific techniques or conditions are not indicated in the examples, the techniques or conditions described in the literatures in the art or described in the product specifications are followed. The reagents or instruments for which no manufacturers are noted are all common products commercially available from the market.

### I. Preparation method

### Example 1

### 1) Preparation of positive electrode plate

0.1 mol of lithium carbonate, 0.198 mol of ferrous oxalate, 0.2 mol of monobasic ammonium phosphate power, 0.001 mol of tetrabuty titanate, 0.015 mol of glucose, and 0.1 g of graphene power were evenly dispersed in 50 ml of absolute ethanol, and ball milled for 12 h at a speed of 400 r/min. The ball milled power was oven dried to obtain a mixed precursor power. Then, the precursor power was placed in a sintering oven, an inert atmosphere was introduced, the temperature was raised to 600°C at a rate of 2°C/min and held for 14 h, to obtain a lithium iron phosphate positive electrode material. The lithium iron phosphate positive electrode material has an I_{d}/I_{g} value of 1.1, and a powder resistivity under a pressure of 16 Mpa of 12.0 Q • cm.

The prepared lithium iron phosphate positive electrode active material (LFP), the conductive agent Super P, and the binder polyvinylidene fluoride (PVDF) were mixed at a weight ratio of 97:1:2. The solvent N-methylpyrrolidone was added and stirred uniformly to obtain a positive electrode slurry. The positive electrode slurry was evenly applied on two surfaces of an aluminum foil as a positive electrode current collector, then dried, cold pressed, and cut to obtain a positive electrode plate. The single-side coating amount of the positive electrode film layer was 21.7 mg/cm².

### 2) Preparation of negative electrode plate

The negative electrode active material graphite, the thickener sodium carboxymethyl cellulose, the binder styrene-butadiene rubber, and the conductive agent acetylene black were mixed at a weight ratio of 95:2:2:1, and then deionized water was added and stirred by a vacuum stirrer to obtain a negative electrode slurry. The negative electrode slurry was evenly applied on two surfaces of a copper foil as a positive electrode current collector, then dried, cold pressed, and cut to obtain a negative electrode plate. The single-side coating amount of the negative electrode film layer was 9.7 mg/cm².

### 3) Preparation of electrolyte solution

Under an argon atmosphere with a moisture content of <10 ppm, 2,2-difluoroethyl acetate, ethylene carbonate (EC), and methylethyl carbonate (EMC) were mixed at a weight ratio of 3:3:4, to obtain an organic solvent. Then, LiPF₆ was dissolved in the organic solvent at a concentration of 1.0 mol/L, to prepare an electrolyte solution.

### 4) Separator

A 9 µm-thick polypropylene film was used as the separator.

### 5) Preparation of secondary battery

The positive electrode plate, the separator and the negative electrode plate were stacked in sequence, so that the separator was located between the positive electrode plate and the negative electrode plate for separation, and then an electrode assembly was obtained by winding. The electrode assembly was placed in an outer package and dried, and then the electrolyte solution was injected, followed by procedures such as vacuum packaging, standing, formation, and shaping to obtain a secondary battery.

Main differences of Examples 2-9 and Comparative Example 1-2 from Example 1 are shown in Table 1.

### II. Test methods

### 1. Test of graphitization degree I_{d}/I_{g} of positive electrode active material

Following the method in GB/T 40219-2021, the positive electrode active material powder was pressed into a tablet, and the pressed tablet was tested by using the LabRAM HRP Evolution laser microscopic Raman spectrometer. 3 points were randomly selected on the pressed tablet for test, and an average of three measurements was obtained. A solid laser with a wavelength of 523 nm, a beam diameter of 1.2 µm, and a power of 1 mW was used as a light source. The mode of measurement was macro-Raman, and a CCD detector was used.

### 2. Test of released heat of negative electrode film layer

A fully charged battery core (the state of charge of the secondary battery was 100% or the voltage of the secondary battery was 3.65 V) was disassembled in a glove box. An appropriate amount of the negative electrode plate was removed, and allowed to stand in the DMC solvent for 2 min. Residual electrolyte solution was washed away, and then dried for 8 h. The negative electrode film layer on the electrode plate was scraped off.

Ethylene carbonate and methylethyl carbonate were mixed at a volume ratio of 3:7, and LiPF6 was added to the mixed solvent, to form an electrolyte solution with LiPF6 at a concentration of 1 mol/L.

The released heat Q of the negative electrode film layer was measured by using a differential scanning calorimeter through a measurement process below. The negative electrode film layer and the electrolyte solution were added to a test crucible at a ratio of 0.78: 1, and heated from 30°C to 450°C at a heating rate of 5°C/min.

### 3. Test of powder resistivity

Following the standard GB/T 30835-2014, a resistance tester was used for testing, and the resistivity under a pressure of 16 Mpa was recorded.

### 4. Test of energy efficiency of battery core

At 25°C and under normal pressure, the prepared secondary battery was discharged to 2.5 V at a constant power of 0.5 P and then allowed to stand for 30 min. Then the battery was charged to 3.65 V at a constant power of 0.5 P, and the charging energy E1 at this time was recorded. The battery was then allowed to stand for 30 min. Then, the battery was discharged to 2.5 V at a constant power of 0.5 P, and the discharging energy E2 at this time was recorded. The energy efficiency of the battery core at a rate of 0.5 P = E2/E1 * 100%.

### 5. Method for testing cycle life and expansion force of battery core

The secondary battery core was installed with a fixture and a pressure sensor. The initial force of the fixture was 3000 N. The external pressure on a large surface (length× height) of the battery core was monitored by a pressure sensor. The battery core was subjected to a charge-discharge cycle test on a charge-discharge tester at 45°C. The rate during the cycle process was 0.5 P (that is, the charge rate and the discharge rate were both 0.5 P), the charge voltage was 2.5 V to 3.65 V, and the capacity and the maximum pressure value of each cycle during the cycle process were recorded. The maximum pressure value of the 1000th cycle was the expansion force (N) of the 1000th cycle. 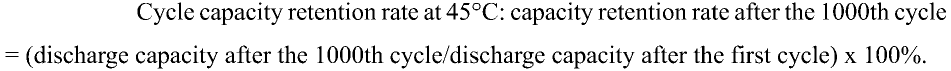 Cycle capacity retention rate at 45°C: capacity retention rate after the 1000th cycle = (discharge capacity after the 1000th cycle/discharge capacity after the first cycle) x 100%.

### 6. Test of maximum temperature on large surface of overcharged battery core

An overcharge test was performed following the overcharge test standard in GBT 36276-2023, and the maximum temperature on the large surface of an overcharged battery core was recorded.

### 7. Content of element M

The content of the element M was tested by ICP.

### 8. Composition of carbon shell layer

The morphology of the carbon layer on the surface of the positive electrode material was observed by transmission electron microscopy, and the composition of the carbon shell layer was determined by combining with the interlayer spacing of the carbon shell layer. The interlayer spacing of amorphous carbon is larger than that of graphene. If the interlayer spacing with two different thicknesses is observed, it indicates that there are two carbon compositions.

### III. Analysis of test results of examples and comparative examples

The batteries in the examples and the comparative examples were respectively prepared according to the above methods, and performance parameters were determined. Related parameters of the positive electrode active material and the negative electrode plate are shown in Table 1, and the performance test results of the secondary batteries are shown in Table 2.

**Table 1: Related parameters of positive electrode active material and negative electrode plate**

| Example | Lithium iron phosphate material | | | | | Released heat Q of negative electrode plate (J/g) |
|---|---|---|---|---|---|---|
| | Doped element | Doped amount (%) | Composition of carbon shell layer | Id/Ig | Powder resistivity (Q • cm) | |
| Example 1 | Ti | 0.08 | Amorphous carbon + graphene | 1.1 | 12.0 | 360.2 |
| Example 2 | Ti | 0.08 | Amorphous carbon + graphene | 0.9 | 11.4 | 360.3 |
| Example 3 | Ti | 0.08 | Amorphous carbon + graphene | 1.3 | 13.8 | 360.1 |
| Example 4 | Ti | 0.08 | Amorphous carbon + graphene | 0.3 | 10.1 | 360.5 |
| Example 5 | Ti | 0.08 | Amorphous carbon + graphene | 1.1 | 12.0 | 250.4 |
| Example 6 | Ti | 0.08 | Amorphous carbon + graphene | 1.1 | 12.0 | 599.6 |
| Example 7 | / | 0 | Amorphous carbon + graphene | 1.1 | 12.0 | 360.5 |
| Example 8 | Ti | 0.03 | Amorphous carbon + graphene | 1.1 | 12.0 | 360.3 |
| Example 9 | Ti | 0.3 | Amorphous carbon + graphene | 1.1 | 12.0 | 360.7 |
| Comparative Example 1 | Ti | 0.08 | Amorphous carbon | 1.9 | 32.1 | 360.4 |
| Comparative Example 2 | Ti | 0.08 | Amorphous carbon + graphene | 1.1 | 12.0 | 700.8 |

**Table 2. Performance test result of secondary battery**

| Example | Battery core energy efficiency | Large surface of maximum temperature (°C) | 1000 cycles at 45°C capacity retention rate | 1000 cycles at 45°C expansion force (N) |
|---|---|---|---|---|
| Example 1 | 95.2% | 77 | 92.4% | 10000 |
| Example 2 | 95.5% | 78 | 92.7% | 9600 |
| Example 3 | 94.7% | 77 | 91.8% | 10500 |
| Example 4 | 94.4% | 79 | 91.5% | 8800 |
| Example 5 | 95.2% | 50 | 92.4% | 10000 |
| Example 6 | 95.2% | 96 | 92.4% | 10000 |
| Example 7 | 94.1% | 77 | 91.3% | 10700 |
| Example 8 | 94.6% | 77 | 92.0% | 10400 |
| Example 9 | 94.3% | 78 | 91.6% | 10600 |
| Comparative Example 1 | 90.4% | 78 | 89.7% | 16000 |
| Comparative Example 2 | 95.2% | 298 | 92.4% | 10000 |

It can be known from the above results that all the secondary batteries in Examples 1 to 9 includes a positive electrode plate, a negative electrode plate, and an electrolyte solution. The positive electrode plate includes a positive electrode current collector and a positive electrode film layer that is disposed on at least one side of the positive electrode current collector and includes a positive electrode active material. The positive electrode active material includes a core of a lithium iron phosphate material and a carbon shell layer that is at least partially coated on an outer surface of the core. In the Raman spectrum of the positive electrode active material, the ratio I_{d}/I_{g} of the peak intensity I_{d} of the D peak with a Raman shift of 1350±50 cm⁻¹ to the peak intensity I_{g} of the G peak with a Raman shift of 1580±50 cm⁻¹ is 0.2-1.5. The negative electrode plate includes a negative electrode current collector and a negative electrode film layer disposed on at least one side of the negative electrode current collector. When the state of charge of the secondary battery is 100% or the voltage of the secondary battery is 3.65 V, the released heat Q of the negative electrode film layer in an electrolyte solution meets: 250 J/g ≤ Q ≤ 600 J/g.

As can be seen from the comparison of Examples 1 to 9 with Comparative Examples 1 to 2, the secondary battery provided in the examples of the present application has both high energy efficiency and good overcharge safety.

As can be seen from the comparison of Examples 1 to 3 with Example 4, when the I_{d}/I_{g} of the positive electrode active material is 0.9 to 1.3, the secondary battery provided in the examples of the present application has high energy efficiency and good cycle performance.

As can be seen from the comparison of Examples 1, 2, and 4 with Example 3, when the I_{d}/I_{g} of the positive electrode active material is 0.3 to 1.1, the secondary battery provided in the examples of the present application has a low expansion force.

As can be seen from the comparison of Examples 1-2 with Examples 3-4, when the I_{d}/I_{g} of the positive electrode active material is 0.8 to 1.2, the secondary battery provided in the examples of the present application has high energy efficiency, good cycle performance, and low expansion force.

As can be seen from the comparison of Examples 1, 8 and 9 with Example 7, when the content of the element M is 0.02% to 0.3% (based on the total weight of the positive electrode active material), the secondary battery provided in the examples of the present application has high energy efficiency and good cycle performance.

As can be seen from the comparison of Examples 1 and 8 with Examples 7 and 9, when the content of the element M is 0.03% to 0.1% (based on the total weight of the positive electrode active material), the secondary battery provided in the examples of the present application has high energy efficiency and good cycle performance.

It is to be understood that the present application is not limited to the foregoing embodiments. The embodiments described above are merely exemplary, and embodiments having substantially the same technical idea and the same effects within the scope of the technical solution of the present application are all included in the technical scope of the present application. In addition, other examples constructed by applying various modifications conceivable to a person skilled in the art to the examples and combining some of the constituent elements of the examples without departing from the scope of the essence of the present application are also included in the scope of the present application.

## Claims

1. A secondary battery, comprising a positive electrode plate, a negative electrode plate, and an electrolyte solution,
the positive electrode plate comprising a positive electrode current collector and a positive electrode film layer that is disposed on at least one side of the positive electrode current collector and comprises a positive electrode active material, the positive electrode active material comprising a core of a lithium iron phosphate material and a carbon shell layer that is at least partially coated on an outer surface of the core, and in the Raman spectrum of the positive electrode active material, the ratio I_{d}/I_{g} of the peak intensity I_{d} of the D peak with a Raman shift of 1350±50 cm⁻¹ to the peak intensity I_{g} of the G peak with a Raman shift of 1580±50 cm⁻¹ being 0.2-1.5; and
the negative electrode plate comprising a negative electrode current collector and a negative electrode film layer disposed on at least one side of the negative electrode current collector, and when the state of charge of the secondary battery is 100% or the voltage of the secondary battery is 3.65 V, the released heat Q of the negative electrode film layer in an electrolyte solution meeting: 250 J/g ≤ Q ≤ 600 J/g.

2. The secondary battery according to claim 1, wherein the I_{d}/I_{g} of the positive electrode active material is 0.9 to 1.3.

3. The secondary battery according to claim 1, wherein the I_{d}/I_{g} of the positive electrode active material is 0.3 to 1.1.

4. The secondary battery according to any one of claims 1 to 3, wherein the I_{d}/I_{g} of the positive electrode active material is 0.8 to 1.2.

5. The secondary battery according to any one of claims 1 to 4, wherein the carbon shell layer comprises both amorphous carbon and graphene.

6. The secondary battery according to any one of claims 1 to 5, wherein the powder resistivity of the positive electrode active material under a pressure of 16 Mpa is 0 to 30 Q • cm.

7. The secondary battery according to any one of claims 1 to 6, wherein
the lithium iron phosphate material comprises a material represented by the following formula:
LiₓFe_{y}M_{z}PO₄,
wherein 0.95 < x < 1.05, 0.96 < y ≤ 1, 0 ≤ z < 0.04, and
M comprises one or more of Ti, V, Mg, Zr, and Y.

8. The secondary battery according to claim 7, wherein the content of the element M based on the total weight of the positive electrode active material is 0.02% to 0.3%.

9. The secondary battery according to claim 7, wherein the content of the element M based on the total weight of the positive electrode active material is 0.03% to 0.1%.

10. A power consuming apparatus, comprising the secondary battery according to any one of claims 1 to 9.
